# EUROPÄISCHE PATENTSCHRIFT

(11) **EP 1 129 812 B1**
(45) Veröffentlichungstag und Bekanntmachung des Hinweises auf die Patenterteilung: **09.02.2005**
(21) Anmeldenummer: 01105656.1
(22) Anmeldetag: 26.08.1997
(51) Int. Cl.: B23K 26/06, A61C 1/00, A61N 5/06, A61B 18/20

(54) **Laserinstrument**
Laser Instrument
Instrument à laser

(30) Priorität: 06.09.1996 DE 19636265
(43) Veröffentlichungstag der Anmeldung: 05.09.2001
(62) Teilanmeldung aus: 97114745.9
(73) Patentinhaber: Kaltenbach & Voigt GmbH & Co. KG, 88400 Biberach/Riss (DE)
(72) Erfinder: Liebermann, Bernd, 88250 Weingarten (DE); Hack, Alexander, 88400 Bieberach-Rissegg (DE); Hibst, Raimund Dr., 89155 Erbach (DE); Stock, Karl, 73479 Ellwangen (DE); Keller, Ulrich Dr. Prof., 89075 Ulm (DE)
(74) Vertreter: Schmidt-Evers, Jürgen, Dipl.-Ing.

(56) Entgegenhaltungen:
- EP-A- 0 514 258
- DE-A- 4 030 734
- DE-C- 4 038 809
- US-A- 4 826 431

## Beschreibung

Die Erfindung bezieht sich auf ein Laserinstrument nach dem Oberbegriff des Anspruchs 1.

Hinsichtlich der Bauweise unterscheidet man bei Laserinstrumenten zwischen solchen, bei denen sich das Laser-Auskoppelelement in der Längsrichtung des stabförmigen Halteteils erstreckt und solchen, bei denen das Laser-Auskoppelelement sich quer zum stabförmigen Halteteil erstreckt.

Der Einsatz des ersteren Laserinstruments ist auf Einsatzfälle beschränkt, in denen die Behandlungsstelle von einem großen Freiraum umgeben ist, der leicht zugänglich ist, wie es z.B. bei der Behandlung der Haut des menschlichen oder tierischen Körpers mit dem Laserinstrument der Fall ist. Ein solches Laserinstrument ist in der DE 38 40809 A1 beschrieben.

Es ist jedoch aus ergonomischen und visuellen Gründen vorteilhafter, ein Laserinstrument zu verwenden, dessen Laser-Auskoppelelement sich quer zum stabförmigen Halteteil oder Griffteil erstreckt. Ein solches Laserinstrument läßt sich mit der Bedienungshand ergonomisch günstig halten, wobei die Blickrichtung auf die Behandlungsstelle verbessert ist, weil sie quer zur Mittelachse des Laser-Auskoppelelements gerichtet ist oder das Laserinstrument oder die behandelnde Person die Arbeiten in einer solchen Stellung durchführen kann, daß die quer zum Laser-Auskoppelelement hin gerichtete Blickrichtung günstig ist.

Es zeigt sich, daß von einer günstigen Bauform des Laserinstruments und auch Blickrichtung nicht nur die physische Belastung der behandelnden Person sondern auch die Qualität der auszuführenden Arbeiten mit dem Laser abhängig ist. In einer günstigen Behandlungsposition kann die behandelnde Person die Arbeiten mit verringerter Anstrengung und Aufmerksamkeit zum einen präziser und qualitativer und zum anderen länger durchführen, weil die physischen Kräfte weniger beansprucht werden.

Die vorgenannten Schwierigkeiten ergeben sich insbesondere an solchen Behandlungsstellen, die schwierig zugänglich sind, wie es z.B. in Körperhöhlen und insbesondere im Mundraum des menschlichen oder tierischen Körpers der Fall ist. In solchen Einsatzfällen eignen sich winkelförmige Laserinstrumente, d.h. solche Bauarten, bei denen das Laser-Auskoppelelement quer zur Längsmittelachse des stabförmigen Halteteils oder Griffteils gerichtet ist. Bei einem solchen Laserinstrument ist der austretende Laserstrahl quer gerichtet. Hierdurch ist zum einen der Zugang zu verschiedenen Behandlungsstellen im Körperhohlraum günstig, und zum anderen läßt sich das Laserinstrument sowohl ergonomisch günstig halten und für den Operationseingriff bewegen sowie günstig beobachten. Dabei ist zu berücksichtigen, daß diese Tätigkeiten durch die Öffnung des Körperhohlraums hindurch erfolgen muß.

Aus den vorgenannten Gründen wird ein vorgenanntes winkelförmiges Laserinstrument vermehrt sowohl für die Behandlung an schwer zugänglichen Behandlungsstellen als auch an leicht zugänglichen Behandlungsstellen verwendet. Es ist zwar ein winkelförmiges Laserinstrument aufwendiger herzustellen, weil es einer Umlenkung der Laserstrahlen bedarf, jedoch überwiegen die vorbeschriebenen Vorteile.

Im weiteren ist zwischen solchen Laserinstrumenten zu unterscheiden, bei denen das Laser-Auskoppelelement im Halteteil angeordnet ist, und solchen, bei denen es aus dem Halteteil vorragt. Bei der ersteren Bauweise tritt lediglich die Laserstrahlung aus dem Halteteil heraus, insbesondere fokussiert, auf einen in einen bestimmten Abstand vom Laserinstrument angeordneten Brenn- bzw. Behandlungspunkt. Im zweiten Fall wird die Laserstrahlung auch außerhalb des Halteteils im Laser-Auskoppelelement noch geleitet, wobei die Auskopplung oder der Austritt der Laserstrahlung am freien Ende des. Laser-Auskoppelelements erfolgt und wobei dieses freie Ende direkt an das zu behandelnde Gewebe herangeführt werden kann und gegebenenfalls zusätzlich zu der Bestrahlung mit dem Laser-Auskoppelelement mechanisch auf das Gewebe eingewirkt werden kann.

Ein Laserinstrument der eingangs angegebenen Art ist in der DE 40 30 734 A1 oder in der DE 40 38 809 C1 beschrieben.

Die erstere Druckschrift zeigt ein Laserinstrument, das an seinem vorderen Ende einen seitlichen Winkelfortsatz aufweist, an dessen freien Ende die Laserstrahlung durch eine Austrittsöffnung fokussiert austritt. Zur Umlenkung der Laserstrahlung ist im Winkelbereich des Laserinstruments ein Spiegel vorgesehen. Das Laser-Auskoppelelement ist durch eine Linse gebildet, die innerhalb der Austrittsöffnung im Laser-Laserinstrument angeordnet ist. Im übrigen sind weitere optische Elemente zur Führung und Leitung der Laserstrahlung im Laser-Laserinstrument angeordnet.

Aus der zweiten Druckschrift ist ein dentales Laserinstrument mit einem Laser-Auskoppelelement beschrieben, das am vorderen Ende eines im wesentlichen geraden Halteteils oder Handstücks seitlich vorragt und mittels eines Steckteils im Bereich einer Austrittsöffnung gehalten ist. Innerhalb des Handstücks ist der Austrittsöffnung eine Umlenkvorrichtung für die Laserstrahlen vorgeordnet, die durch ein Prisma mit einer schrägen Lichtbrechungsfläche gebildet ist, die der Zuführungsrichtung der Laserstrahlung abgewandt ist. Die der Laserstrahlung zugewandte Fläche des Prismas erstreckt sich rechtwinklig zur Zuführungsrichtung der Laserstrahlung und parallel zur Längsmittelachse des Laser-Auskoppelelements. In einem nach hinten gerichteten Abstand vom Prisma ist im Laserinstrument bzw. im Griffteil eine Linse axial verschiebbar gelagert, deren Zweck es ist, die zum Prisma gelangende Laserstrahlung so zu fokussieren, daß Laser-Auskoppelelemente unterschiedlicher Querschnittsgröße einsetzbar sind, z.B. ein Laser-Auskoppelelement für eine äußere Zahnbehandlung und ein Laser-Auskoppelelement für eine Wurzelkanalbehandlung.

Der Erfindung liegt die Aufgabe zugrunde, ein Laserinstrument der vorliegenden Art so auszugestalten, daß seine Handhabung bei der Behandlung und ggf. auch seine Wirksamkeit verbessert ist.

Diese Aufgabe wird durch die Merkmale des Anspruches 1 gelöst.

Bei dieser erfindungsgemäßen Ausgestaltung ist das Auskoppelelement um eine in seiner Längsrichtung verlaufende Drehachse frei drehbar im Halteteil bzw. Handstück des Laserinstruments gehalten. Außerdem ist dem Laserinstrument eine Zuführungsvorrichtung für eine Behandlungsflüssigkeit, insbesondere Wasser, zugeordnet, deren eine oder mehrere Mündungsöffnungen auf die Behandlungsstelle gerichtet sind. Diese Ausgestaltung ist aus mehreren Gründen von Vorteil.

Zum einen ist das Auskoppelelement durch manuelles Verdrehen in wahlweise Dreh-Positionen einstellbar. Hierdurch können wahlweise Umfangsflächenbereiche des Auskoppelelements ausgenutzt werden. Außerdem ist diese Ausgestaltung bei solchen Auskoppelelementen von Vorteil, die eine Mantel- oder Stirnfläche oder Lichtaustrittsfläche aufweisen, die von einer rotationssymmetrischen Fläche abweicht. Hierbei kann jeweils ein bestimmter Flächenbereich des Auskoppelelements in eine günstige Drehstellung bezüglich der zu behandelnden Körperstelle gedreht werden.

Zum anderen kann aufgrund der freien Drehbarkeit des Auskoppelelementes kein Drehmoment mit dem Laserinstrument auf die Behandlungsstelle, z.B. einen Zahn, übertragen werden, was zu einer beträchtlichen Belastung oder Überbelastung z.B. des Zahns führen kann. Diese Ausgestaltung eignet sich insbesondere für ein Auskoppelelement mit einer unrunden, insbesondere flachen Querschnittsform. Bei einer solchen Querschnittsform kann mit dem Laserinstrument bzw. Handstück ein aufgrund der großen Hebelübersetzung (Handstücklänge/Querschnittsabmessung des Auskoppelelements) großes und schädliches Drehmoment auf die Behandlungsstelle bzw. den Zahn oder im Zwischenzahnbereich übertragen werden. Bei der erfindungsgemäßen Ausgestaltung ist eine solche Drehmomentübertragung ausgeschlossen. Diese Ausgestaltung ist auch bei einem Auskoppelelement mit einem kreisrunden Querschnitt von Vorteil, weil auch bei einer solchen Querschnittform schädliche Drehmomente übertragen werden können, wenn das Auskoppelelement nicht frei drehbar gelagert ist, z.B. dann, wenn das Auskoppelelement zwischen zwei Zähnen verklemmt ist. Ferner ist die erfindungsgemäße Ausgestaltung bei solchen Auskoppelelementen von Vorteil, bei denen die freie Stirnfläche des Auskoppelelementes von einer rotationssymmetrischen Form abweicht. Auch an der Stirnfläche können bei einer solchen Form schädliche Zwängungen entstehen, wenn das Auskoppelelement nicht frei drehbar gelagert ist.

Ein weiterer Vorteil dieser erfindungsgemäßen. Ausgestaltung besteht darin, daß das Auskoppelelement sich aufgrund seiner freien Drehbarkeit selbsttätig an die zu behandelnde Fläche, z.B. am Zahn oder Zahnfleisch anzupassen vermag. Dies ist dann der Fall, wenn das Auskoppelelement eine seitliche und/oder stirnseitige Fläche aufweist, die von der Rotationssymmetrie des Auskoppelelements abweicht. Für diese Anpassungsfähigkeit wird auch die Wirksamkeit der Laserbehandlung insbesondere dann verbessert, wenn an dieser Fläche oder Flächen die Laserstrahlen austreten. Wenn das Auskoppelelement sich an die jeweils zugehörige Fläche der Umgebung anzupassen vermag, dann ergibt sich jeweils eine günstige Anlage und ein günstiger Wirkbereich für die auf dieser Fläche des Auskoppelelements austretenden Laserstrahlen. Bei einem nicht frei drehbar gelagerten Auskoppelelement ergeben sich dagegen unterschiedliche Abstände der Laserstrahl-Austrittsfläche am Auskoppelelement bezüglich der Umgebung, wodurch die Wirksamkeit der Laserbestrahlung beeinträchtigt wird.

Die Laserlichtleitung im Auskoppelelement erfolgt vorzugsweise unter Ausnutzung der Totalreflexion.

In den Unteransprüchen sind Merkmale enthalten, die aus weiteren Gründen eine einfache und kleine Bauweise gewährleisten, eine Anpassung des Auskoppelelements an unterschiedliche Positionen des zu behandelnden Objektes ermöglichen, die Laserlichtleitung verbessern und eine handhabungsfreundliche Verstellung des Auskoppelelements gewährleisten sowie eine kostengünstig herstellbare Ausgestaltung und Montage ermöglichen.

Weitere Merkmale führen zu einer Verbesserung der Wirksamkeit durch die Verwendung einer bestimmten Laserstrahlung.

Das erfindungsgemäße Laserinstrument läßt sich sehr vorteilhaft zur äußeren Behandlung von Zähnen und des Zahnfleisches einsetzen, wie der Entfernung von Zahnsteinbelag und/oder für eine Parodontosebehandlung.

Nachfolgend werden die Erfindung und weitere durch sie erzielbare Vorteile anhand bevorzugter Ausgestaltungen und einer Zeichnung näher erläutert. Es zeigt
- Fig. 1: den vorderen Endbereich eines medizinischen oder dentalen Laserinstruments im vertikalen Längsschnitt;
- Fig. 2: den freien Endbereich eines Laser-Auskoppelelements in der Blickrichtung quer zu seiner Längsachse;
- Fig. 3: ein Auskoppelelement in der Blickrichtung quer zu seiner Längsachse, in abgewandelter Ausgestaltung;
- Fig. 4: ein Auskoppelelement in weiter abgewandelter Ausgestaltung;
- Fig. 5: das Laser-Auskoppelelement nach Fig. 4 in der Seitenansicht;
- Fig. 6: das Laser-Auskoppelelement in der Unteransicht;
- Fig. 7: ein Laser-Auskoppelelement in abgewandelter Ausgestaltung;
- Fig. 8: ein Laser-Auskoppelelementin weiter abgewandelter Ausgestaltung;
- Fig. 9: ein Laser-Auskoppelelement in weiter abgewandelter Ausgestaltung;
- Fig. 10: ein Laser-Auskoppelelement in weiter abgewandelter Ausgestaltung;
- Fig. 11: das Auskoppelelement nach Fig. 10 in der Seitenansicht;
- Fig. 12: das Auskoppelelement nach Fig. 10 in abgewandelter Ausgestaltung.

Das Laserinstrument weist ein stabförmiges, sich vorzugsweise im wesentlichen gerade oder abgewinkelt erstreckendes Halteteil, hier in Form eines Handstücks 1 auf, das in seinem hinteren Endbereich ein Griffteil bildet und eine Griffhülse 2 aufweist, durch die sich längs ein Lichtleitkanal 3 vorzugsweise koaxial erstreckt. Das nicht dargestellte hintere Ende des Laserhandstücks ist durch eine Kupplung, insbesondere eine Steck-/Drehkupplung oder eine Schraubkupplung an ein Anschlußstück anschließbar, das durch eine flexible Versorgungsleitung mit einer Steuer- und Versorgungseinrichtung für Energie und gebräuchliche Medien verbunden ist. Eine vorbeschriebene Schnellkupplung mit einer zylindrischen Kupplungsausnehmung und einen darin einfassenden zylindrischen Kupplungszapfen ist an sich bekannt. Die Laser-Zuführung erfolgt durch die flexible Leitung und durch den Kupplungszapfen hindurch in den Lichtleitkanal 3, bei dem es sich um einen freien Kanal oder um einen Lichtleiter handeln kann, der in dem Kanal 3 eingesetzt ist. In einem Abstand a vom vorderen Ende des Laserhandstücks 1 befindet sich im Lichtleitkanal 3 eine Linse 4, die in einer vorzugsweise von vorne in die Griffhülse 2 eingesetzten Buchse 5 zwischen einer Innenschulter 6 und einer in die Buchse 5 vorzugsweise von vorne eingeschraubten Hülse 7 fixiert ist. Vor der Linse 4 befindet sich ein freier Hohlraum im Laserhandstück 1.

Am vorderen Ende weist das Laserhandstück 1 eine seitliche Öffnung 8 auf, in deren Bereich eine Haltevorrichtung 9 mit einer Fassung 14 für ein Laser-Auskoppelelement 15 angeordnet ist. Die Öffnung 8 ist durch eine seitliche Hülsenbuchse 11 gebildet, in die von außen ein Einsatz- oder Schraubteil 12 eingesetzt bzw. eingeschraubt ist, das mit einem Ringanschlag 13 an der Stirnfläche der Hülsenbuchse 11 anliegt und somit axial fixiert ist. Im Schraubteil 12 ist koaxial die Fassung 14 ausgebildet, in der das stabförmige Auskoppelelement 15 um seine Längsachse 16 frei drehbar und axial unverschiebbar gelagert ist. Hierzu dient eine hohlzylindrische Stufenbohrung 17, in der ein zylindrischer Schaft 15a des Auskoppelelements 15 und ein darauf befestigter radialer Halteansatz 18, hier in Form eines hohlzylindrischen Halterings, mit Bewegungsspiel aufgenommen sind. Der Halteansatz 18 ist zwischen Schulterflächen 19a, 19b des Handstücks 1 und des Schraubteils 12 axial gehalten und lösbar oder unlösbar auf dem zylindrischen Schaft 15a des Auskoppelelements 15 befestigt, z .B. durch Kleben oder Klemmen oder Aufpressen. Der Haltevorsprung 18 kann auch einstückig am Auskoppelelement 15 angeformt sein und aus dem gleichen Material bestehen.

Das Auskoppelelement 15 besteht aus lichtdurchlässigem Material wie Glas bzw. Quarz, Saphir, Kristall oder Kunststoff. Es ragt um das Maß 15b von etwa 10 bis 25 mm, insbesondere etwa 20 mm, aus dem Handstück 1 heraus, wobei der freie Endbereich dieses Verbindungsschaftes 15b in noch zu beschreibender Weise einen Behandlungsabschnitt 15c bildet.

Es ist besonders vorteilhaft, für ein Auskoppelelement 15 eine Lichtleitfaser zu benützen oder das Auskoppelelement aus einer Lichtleitfaser als Ausgangsmaterial herzustellen. Hierdurch ist eine verlustarme oder verlustlose Laserlichtleitung im Auskoppelelement 15 möglich. Außerdem können bei der Einkoppelung des Laserlichtes in das Auskoppelelement Verluste wesentlich verringert oder vermieden werden. Dies wird dadurch erreicht, daß die übliche Lichtleitfaser aus einem Kern und einem Mantel besteht, deren Brechungsindexe unterschiedlich sind. Hierdurch ergibt sich eine günstige Numerische Aperatur, wobei die Lichtleitung im Auskoppelelement bei Totalreflexion an seiner Mantelfläche stattfindet und dadurch im wesentlichen verlustlos geleitet wird. Dies ist bei Lichtleitfasern an sich bekannt.

Das obere bzw. innere Ende des Auskoppelelements 15 weist eine schräg zur Längsmittelachse 3a des Lichtleitkanals 3 und schräg zur Längsmittelachse 16 des Auskoppelelements 15 verlaufende Laser-Einkoppelfläche 21 auf, die an der nach hinten gerichteten Seite des Auskoppelelements 15 angeordnet ist und somit nach hinten bzw. zum Lichtleitkanal 3 hin gerichtet ist. Die Einkoppelfläche 21 ist vorzugsweise durch eine Kegelfläche gebildet, die z.B. geschliffen oder angeschliffen sein kann. Die Querschnittsgröße des vorzugsweise runden Auskoppelelements 15 ist verhältnismäßig klein und beträgt etwa 0,6 bis 3 mm, insbesondere etwa 2 mm im Durchmesser. Aufgrund dieser geringen Querschnittsabmessungen sind an das Auskoppelelement 15 besondere Festigkeitsanforderungen gestellt. Es ist deshalb vorteilhaft, das Auskoppelelement 15 zu seinem freien Ende hin konvergent auszugestalten, so daß im Bereich des Verbindungsschaftes 15b und des Halteschaftes 15a ein größerer Querschnitt vorgegeben ist. In diesem Schaftbereich soll die Festigkeit größer sein, weil dieser Bereich aufgrund einer Hebelwirkung bei der Behandlung besonders bruchgefährdet ist.

Das freie Ende und/oder der Verbindungsschaft 15c des Auskoppelelements 15 können verschiedene Formen aufweisen, die an eine gewünschte Behandlungsmaßnahme angepaßt sind. Wie im weiteren noch beschrieben wird, ist das Laserinstrument 1 bzw. Das Auskoppelelement 15 vorzüglich dazu geeignet, vom Kiefer bzw. Zahnfleisch oder von den Zähnen und insbesondere im Bereich der Zahntaschen schädliche Beläge wie Zahnstein und Konkremente zu entfernen. Dies erfolgt durch eine Laserbestrahlung, die im freien Endbereich, insbesondere an der Stirnfläche des Auskoppelelementes 15 austritt und den Belag zerstört, wobei er gleichzeitig oder bei einer Nachreinigung entfernt werden kann.

Für eine Außenbehandlung der Zähne oder des Zahnfleisches könnte das Auskoppelelement 15 im Querschnitt gleich dick bemessen sein. Für eine Behandlung in den Zahntaschen sollte der Behandlungsabschnitt 15c im Querschnitt nur so groß bemessen sein, daß er in die Zahntasche eingeführt werden kann. Da die Zahntasche einen Spalt darstellt, ist es vorteilhaft, das Auskoppelelement 15 im Bereich des Behandlungsabschnitts 15c oder auch des Verbindungsschaftes 15b mit einer länglichen Querschnittsform auszubilden, so daß es an den Spalt angepaßt ist. Dies kann durch eine Keilform mit auf einer oder beiden Seiten angeordneten Keilflächen erreicht werden, die - im Querschnitt gesehen - ebene Flächen oder auch leicht gerundete Flächen sein können. Aufgrund dieser flachen Querschnittsform kann das Auskoppelelement 15 leicht in eine Zahntasche eingeführt werden, wobei es je nach der gewünschten Behandlungstiefe einige mm eingeführt werden kann. Die freie Stirnfläche des Auskoppelelementes 15, mit der es in die Zahntasche eindringt, kann eben, konvex oder konkav ausgebildet sein. Dabei kann es sich um sphärische oder prismatische konvexe oder konkave Formen handeln, wobei bei einer länglichen Querschnittsform die prismatische Form vorzugsweise parallel zur Längsrichtung der länglichen Querschnittsform verläuft.

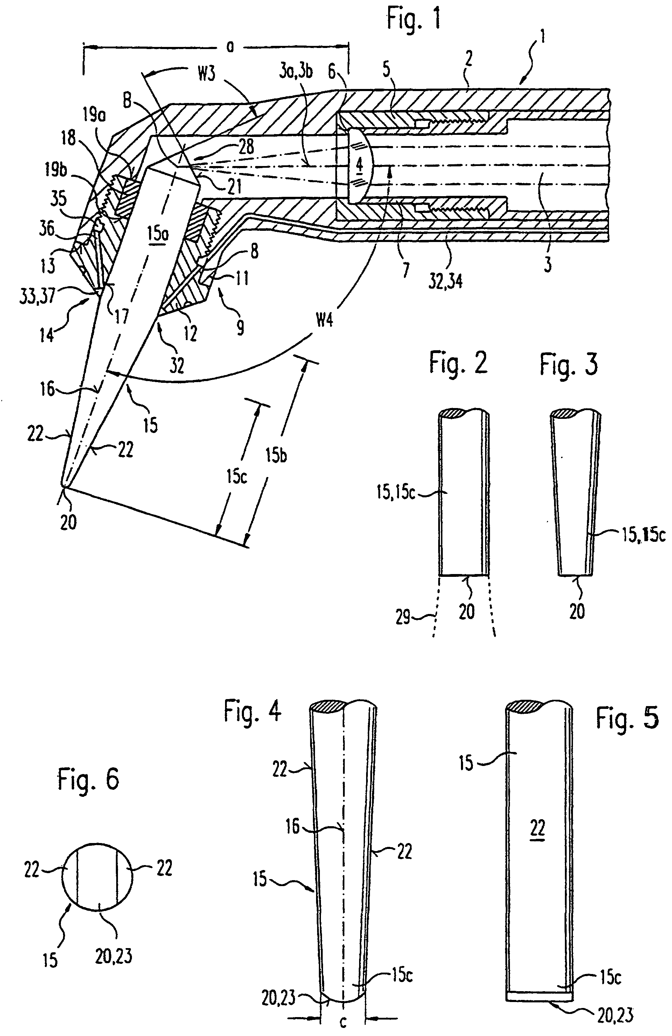

Bei der Ausgestaltung nach Fig. 2 ist der freie Endbereich oder Verbindungsschaft 15 b zylindrisch ausgebildet, wobei sich dieser zylindrische Abschnitt koaxial an einem im Durchmesser gleichen oder gößeren Halteschaft 15a fortsetzten kann. Die freie Stirnfläche 20 kann eine ebene diametrale oder geneigte oder konkav gerundete oder keilförmig angespitzte Fläche sein.

Gemäß Fig. 3 ist der Verbindungsschaft 15b kegelförmig ausgebildet, wobei die Stirnfläche 20 diametral eben oder ebenfalls geneigt oder konvex gerundet oder keilförmig sein kann. Die Querschnittsabmessung c der Stirnfläche 20 beträgt etwa 0,6 mm. Die zum freien Ende hin konvergente Querschnittsform kann auch durch eine einseitige oder beidseitige Abflachung gebildet sein, wodurch der freie Endbereich des Auskoppelelementes 15 eine keil- bzw. meißelförmige Form erhält. Hierdurch ist am freien Ende ein Scheitel gebildet, der in der Längsrichtung der länglichen Querschnittsform verläuft.

Bei der Ausgestaltung gemäß Fig. 4 bis 6 ist das freie Ende meißelförmig ausgebildet mit zwei einander gegenüberliegenden konvergenten, etwa ebenen Keilflächen 22, die nicht spitz zulaufen, sondern einen geraden, verhältnismäßig breiten Scheitel 23 bilden, dessen Stirnfläche 20 vorzugsweise die Form eines Zylinderabschnitts aufweist. Die Breite des Scheitels 23 entspricht etwa der Hälfte der Querschnittsabmessung des Schaftes 15a, vorzugsweise der Abmessung c von etwa 0,6 mm. Die Stirn- bzw. Scheitelfläche 23 kann eben oder konkav gerundet oder einseitig oder beidseitig spitzdachförmig sein. Die Keilflächen schließen mit der Mittelachse 16 einen Winkel von vorzugsweise etwa 2° oder 2 bis 8° ein.

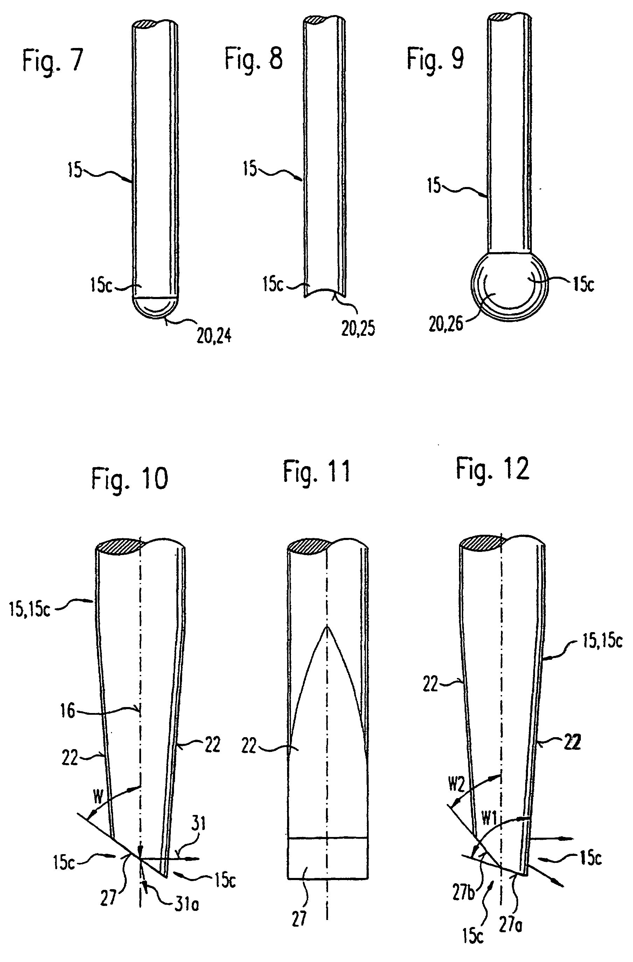

Gemäß Fig. 7 ist das freie Ende des Auskoppelelements 15 zylindrisch ausgebildet mit einer zylinderabschnittsförmigen, sphärischen oder halbkugelförmigen Kuppel 24.

Bei der Ausgestaltung nach Fig. 8 weist das freie Ende des Auskoppelelements 15 eine teilzylindrische oder sphärische konkave Ausnehmung 25 auf.

Gemäß Fig. 9 ist am freien Ende des Auskoppelelements 15 eine gerundete, insbesondere kugelförmige Verdickung 26 angeordnet, deren Querschnittsabmessung größer als die Querschnittsabmessung des die Verdickung tragenden Verbindungsschaftes 15b ist.

Bei der Ausgestaltung nach den Fig. 10 und 11 ist eine zylindrische (Fig.2) oder kegelförmige (Fig.3) oder abgeflachte keilförmige Ausgestaltung Fig. 4) mit einer konvexen, prismatischen Form des Behandlungsabschnittes 15c kombiniert, wobei die Stirnfläche 20 durch eine etwa konkave oder konvex gerundete oder ebene Schrägfläche 27 gebildet ist, die mit der gegenüberliegenden Keilfläche 22 oder mit der Längsmittelachse 16 einen Winkel W von 30 bis 60 oder 70° insbesondere etwa 45° einschließt.

Die Fig. 12 zeigt eine Variante der Ausgestaltung gemäß Fig. 10. Bei dieser Ausgestaltung ist die Schrägfläch durch einen ersten und einen zweiten Schrägflächeabschnitt 27a, 27b gebildet. Der erste, von der einen Seite oder Keilfläche 22 ausgehende Querflächeabschnitt 27a schließt einen Winkel W1 von etwa 60 bis 90°, insbesondere 70° ein, während der zweite Flächeabschnitt einen Winkel von etwa 20 bis 45°, insbesondere etwa 30° einschließt. Die Breite d bzw. deren Abstand von der zugehörigen Seite beträgt etwa die Hälfte der Abmessung c, z.B. 0,2 bis 0,3 mm.

Aufgrund der geringen vorbeschriebenen Abmessungen und Formen ist das Auskoppelelement 15 in der Lage, nicht nur in Zwischenzahnbereichen sondern auch in Zahntaschen zwischen dem Zahnfleisch und der Zahnbasis eingeführt zu werden. Aufgrund der freien Drehbarkeit des Auskoppelelements 15 ist es an die jeweiligen Arbeitsstellungen anpaßbar, und es sind dabei insbesondere bei unrunden Querschnittsformen Zwängungen ausgeschlossen, die durch eine mit dem Laserhandstück 1 übertragene Hebelwirkung auf die Zähne ausgeübt werden könnten, wenn das Auskoppelelement 15 nicht drehbar gelagert wäre.

Die Laserstrahlen werden mit der Linse 4 auf die Einkoppelfläche 21 fokussiert. Die Mittelachse 3b des fokussierten Abschnitts ist vorzugsweise koaxial zur Mittelachse 3a der Leiteinrichtung 3 gerichtet. Ein Brennpunkt kann im Bereich der Mittelachse 16, im Bereich des Kegels oder im Bereich oder auf der Einkoppelfläche 21 liegen. Die Einkoppelfläche 21 bildet mit dem zugehörigen inneren Endbereich des Auskoppelelements 15 aufgrund der natürlichen Lichtbrechung eine Umlenkeinrichtung 28 zur Umlenkung der Laserstrahlen zum freien Ende des Auskoppelelements 15 hin. Aufgrund der kegel- oder stumpfkegelförmigen Form der Einkoppelfläche 21 ist eine verlustarme Einkopplung und Umlenkung in jeder Drehstellung des Auskoppelelements gewährleistet. Der Kegelwinkel W3 ist spitz, rechtwiklig oder stumpf und beträgt vorzugsweise etwa 30 bis 90°, insbesondere etwa 70°. Der von den Mittelachsen 3a und 16c eingeschlossene Winkel W4 kann spitz, rechtwinklig oder stumpf sein und beträgt vorzugsweise etwa 90 bis 155°, insbesondere etwa 110°.

Im Auskoppelelement 15 findet an dessen Mantelfläche vorzugsweise eine Totalreflexion der Laserstrahlen statt, so daß die Lichtleitung im Auskoppelelement 15 ohne Verluste erfolgt. Dies ist bei der vorliegenden Ausgestaltung dadurch gewährleistet, daß das Auskoppelelement 15 vorzugsweise durch eine übliche Lichtleitfaser gebildet oder aus einer solchen gefertigt ist, wobei die von der zylindrischen Form abweichenden Flächen des Kegels 28 und die konischen Flächen im Bereich des Verbindungsschaftes 15b und Lichtaustrittsflächen im Bereich des Behandlungsabschnitts 15c geschliffen sein können. Die Lichtein- und Austrittsflächen sind vorzugsweise poliert.

Im Rahmen der Erfindung ist es jedoch auch dann möglich, im Auskoppelelement 15 eine Totalreflexion herbeizuführen, wenn das Auskoppelelement 15 nicht aus einer Lichtleitfaser sondern aus Glas bzw. Quarz, Saphir, Kristall oder Kunststoff besteht. Hierbei sind die Winkel W3, W4 so groß zu bemessen, daß unter Berücksichtigung der physikalischen Gesetzmäßigkeiten, wie des Fokussierwinkels der Linse 4 und der Lichtstrahlablenkung beim Eintritt des Laserlichts in das Auskoppelelement 15, bei der Weiterleitung des Laserlichts an der Innenmantelfläche des Auskoppelelementes 15 Totalreflexion stattfindet.

Die vorteilhafte Wirkungsweise der Erfindung bei einer Zerstörung bzw. Beseitigung von vorbeschriebenen schädlichen Belägen insbesondere bei einer Parodontosebehandlung in Zahntaschen resultiert aus der Anwendung eines Er:YAG-Lasers, der von der Steuer- und Versorgungseinrichtung durch die flexible Versorgungsleitung durch die Kupplung hindurch zum Handstück 1 geleitet wird. Es hat sich bei Versuchen gezeigt, daß sich ein Er:YAG-Laserlicht mit einer Wellenlänge von etwa 2,94 µm und einer Pulsdauer von etwa 200 bis 400 µs, vorzugsweise etwa 300 µs, gut eignet. Dabei werden vorteilhafte Ergebnisse bei einer Pulsenergie von etwa 100 bis 500 mJ erreicht. Eine zugehörige Laser-Erzeugungseinrichtung ist vorzugsweise so ausgestaltet, daß die Pulsleistung veränderlich und somit einstellbar ist. Es hat sich gezeigt, daß bei einer Energiedichte von mehr als 0,8 J/qcm die schädlichen Beläge zerstört und abgetragen werden können.

Diese Funktion kann darauf zurückgeführt werden, daß bei der Laserbestrahlung des Belags durch das am Behandlungsabschnitt 15c austretende Laserlicht und der dabei stattfindende verhältnismäßig hohe Absorption des Laserlichts im Wasser, welches sich in den Konkrementen befindet, das Wasser bzw. die vorhandene Feuchtigkeit verdampft, wodurch die Konkremente abgetragen werden und wenigstens zum Teil in kleine Partikel zerfallen.

Der Laserstrahl tritt hierbei am distalen Ende des Auskoppelelements 15 im Bereich des Behandlungsinstrumens 15 c aus. Der vom austretenden Laserstrahl eingeschlossene konvergente oder divergente Strahlwinkel und die Homogenität des Strahlprofils wird durch die Lichtleitung im Bereich des Auskoppelelements 15, hier durch die numerische Appertur der Lichtleitfaser, und die Form der Austrittsfläche bestimmt. Es ist vorteilhaft, unterschiedliche Auskoppelelemente 15 vorzusehen, die für eine jeweilige Behandlungssituation angepaßt sind und austauschbar sind. Die vorhandene Haltevorrichtung 10 für das Auskoppelelement 15 ist für einen solchen Austausch eingerichtet.

In Fig. 2 ist der Laserstrahl-Austritt aus der Stirnfläche 20 des Auskoppelelements 15 durch zwei Begrenzungslinien 29 andeutungsweise dargestellt. Die Linien begrenzen einen divergenten Laserstrahl.

Bei der Ausgestaltung gemäß den Fig. 10 bis 12 ist aufgrund der besonderen Formgebung ein besonderer Laserstrahlaustritt vorgegeben. Die gerundete oder ebene Schrägfläche 27 bildet eine innere Reflexionsfläche, an der der Laserstrahl insgesamt oder ein Teil der Strahlung aufgrund von Totalreflexion seitlich reflektiert wird, was andeutungsweise durch die Pfeile 31, 31a verdeutlicht ist. Durch die Größe des Winkels W lassen sich aus folgenden Gründen die Anteile der an der Fläche 27 austretenden Strahlung 31a und der daran seitlich reflektierten Strahlung 31 bestimmen.

Beim Übergang der Laserstrahlen an der Fläche 27 ist ein vom Material des Auskoppelelements 15 abhängiger Grenzwinkel vorgegeben (bei Glas 41°), bei dessen Überschreitung eine Totalreflektion stattfindet und die Laserstrahlen an der Fläche 27 seitlich reflektiert werden, s. Pfeil 31. Wird dagegen der Grenzwinkel unterschritten, treten die Laserstrahlen (unter Vernachlässigung eines reflektierten Anteils) an der Fläche 27 (Pfeil 31a) aus. In Wirklichkeit verläuft die Strahlrichtung der im Auskoppelelement 15 geleiteten Laserstraheln jedoch nicht axparallel zur Mittelachse 16 sondern im Bereich eines gewissen Streuwinkels. Je nach Bedarf ist es deshalb vorteilhaft, den Winkel W unter Berücksichtigung des Brechungsindex des Materials und des Streuwinkels so groß zu wählen, daß die Laserstrahlen im wesentlichen nur an der Fläche 27 austreten (Pfeil 31a) oder an der Fläche 27 austreten und seitlich reflektiert werden (Pfeil 31) oder nur seitlich reflektiert werden.

Dies ist erwünscht, um im Bereich der Stirnfläche 20 und/oder des zugehörigen Endseitenbereichs vorhandene Gewebe bzw. Beläge jeweils einzeln oder gleichzeitig behandeln zu können. Dabei läßt sich durch die Größe des Winkels W die axial (31a) und/oder seitlich (31) wirksame Bestrahlungsenergiemenge bestimmen oder umgekehrt, durch eine erforderliche Bestrahlungsenergiemenge ist der Winkel W3 bestimmt. Diese Ausgestaltung eignet sich insbesondere für die Behandlung in einer Zahntasche. Dabei ist es möglich, jeweils einzeln oder zugleich zwei benachbarte Bereiche der Zahntasche, z.B. die Oberfläche der Zahnbasis und die benachbarte Taschenfläche, zu bestrahlen und Beläge zu eliminieren oder das Taschenepithel zu entfernen.

Die vorbeschriebenen Erklärungen gelten für die Ausgestaltung nach Fig 12 entsprechend. Bei dieser Ausgestaltung läßt sich die axial austretende Strahlung seitlich in den Bereich der Fläche 27b verlagern bzw. konzentrieren.

Bei allen vorbeschriebenen Ausgestaltungen sind die Kanten des Behandlungsabschnitts 15c leicht gerundet, um das Gewebe zu schonen.

Es ist vorteilhaft, das BehandlungsLaserinstrument bzw. Handstück 1 mit einer Zuführungsvorrichtung 32 für eine Behandlungsflüssigkeit, insbesondere Wasser zu versehen, deren wenigstens eine Mündungsöffnung 33 auf die Behandlungsstelle gerichtet ist. Hierdurch ist es möglich, Behandlungsflüssigkeit zuzuführen und dadurch das Klima im Bereich der Behandlungsstelle und die Beläge bzw. Konkrementen ausreichend feucht zu halten, wodurch die vorbeschriebene Beseitigungswirkung verbessert wird und/oder die abgetragenen Partikel ausgespült werden. Es hat sich dabei gezeigt, daß verhältnismäßig wenig Behandlungsflüssigkeit benötigt wird und zuzuführen ist, jedenfalls weniger als es bei üblichen Zahnbohrinstrumenten der Fall ist. Bei Versuchen hat sich die Zuführung einer Behandlungsflüssigkeitsmenge von etwa 4 ml/min als vorteilhaft erwiesen.

Die Zuführungsvorrichtung 32 weist einen Zuführungskanal 34 auf, der sich längs durch das Handstück 1 in den Bereich des seitlichen Austritts erstreckt und von einer nicht dargestellten Zuführungsleitung in der flexiblen Versorgungsleitung, die die vorbeschriebene Kupplung zum Handstück 1 durchsetzt, gespeist wird. Der Zuführungskanal 34 erstreckt sich zur Mündungsöffnung 33, bei der es sich um eine oder mehrere Öffnungen handeln kann, die um das Auskoppelelement 15 verteilt angeordnet sein können. Bei der vorliegenden Ausgestaltung mündet der Zuführungskanal 34 in eine Umfangsnut 35 zwischen dem Einsatzteil 12 und der Hülsenbuchse 11. Von der Umfangsnut 35 erstrecken sich eine oder mehrere verteilt angeordnete Kanäle 36 zum das Auskoppelelement 15 umgebenden vorderen Rand des Einsatzteils 12, wo sie in der Nähe oder vorzugsweise am Auskoppelelement 15 oder an der Innenfläche des es aufnehmenden Loches 17 ausmünden. Hierdurch wird erreicht, daß die Behandlungsflüssigkeit an der Oberfläche des Auskoppelelements 15 entlang rinnt. Dies ist erwünscht, um die Behandlungsflüssigkeit gezielt zur Behandlungsstelle am freien Ende des Auskoppelelements 15 zu führen. Bei der vorliegenden Ausgestaltung ist am vorderen Rand des Einsatzteils 12 eine an das Loch 17 angrenzende Ringnut 37 vorgesehen, in die die Kanäle 36 münden.

Im Auskoppelelement 15 findet vorzugsweise eine Totalreflexion der Laserstrahlen statt.

## Patentansprüche

1. Laserinstrument mit
einem Halteteil (1),
einer das Laserlicht zuführenden Laserlicht-Leiteinrichtung (3),
einem länglichen und sich mit einer geraden Längsmittelachse (16) erstreckenden Auskoppelelement (15) aus lichtdurchlässigem Material,
dessen Längsrichtung in einem Winkel (W4) zu der Richtung angeordnet ist, mit der das Laserlicht aus der Leiteinrichtung (3) austritt,
und das in einem Loch des Halteteils (1) aufgenommen ist und vom Halteteil (1) vorragt,
und einer Laserlicht-Umlenkeinrichtung (28), welche das aus der Leiteinrichtung (3) austretende Laserlicht in das Auskoppelelement (15) einleitet,
wobei dem Laserinstrument eine Zuführungsvorrichtung (32) mit einer Mündungsöffnung (33) für eine Behandlungsflüssigkeit zugeordnet ist,
und wobei die Mündungsöffnung (33) aus einem das Auskoppelelement (15) umgebenden Randbereich des Halteteils (1) mündet,
**dadurch gekennzeichnet,**
**daß** der Bereich des Halteteils (1), aus dem die Mündungsöffnung (33) mündet, an der das Auskoppelelement (15) aufnehmenden Lochwandung angrenzt,
**dass** das Loch eine zylindrische Stufenbohrung mit zwei einander gegenüberliegend angeordneten Schulterflächen (19a, 19b) ist,
und **daß** auf dem Auskoppelelement (15) ein hohlzylindrischer Haltering (18) befestigt ist, mit dem das Auskoppelelement (15) in der Stufenbohrung mit Bewegungsspiel frei drehbar und zwischen den Schulterflächen (19a, 19b) axial gehalten ist.

2. Laserinstrument nach Anspruch 1,
**dadurch gekennzeichnet,**
**dass** die Mündungsöffnung (33) an der Innenfläche des das Auskoppelelement (15) aufnehmenden Loches ausmündet.

3. Laserinstrument nach Anspruch 1 oder 2,
**dadurch gekennzeichnet,**
**dass** mehrere um das Auskoppelelement verteilt angeordnete Mündungsöffnungen (33) angeordnet sind.

4. Laserinstrument nach einem der vorherigen Ansprüche,
**dadurch gekennzeichnet,**
**dass** die Schulterflächen (19a, 19b) einander gegenüberliegend am Halteteil (1) und an einem darin eingeschraubten einem Schraubteil (12) angeordnet sind, das das Loch (17) aufweist.

5. Laserinstrument nach einem der vorherigen Ansprüche,
**dadurch gekennzeichnet,**
**dass** die Mittelachsen (3a, 16) der Leiteinrichtung (3) und des Auskoppelelementes (15) einen Winkel (W4) von etwa 90° bis 130°, insbesondere etwa 110°, einschließen.

6. Laserinstrument nach einem der vorherigen Ansprüche,
**dadurch gekennzeichnet,**
**dass** der freie Endbereich des Auskoppelelements (15) in seinem Querschnitt so groß bemessen ist, daß er in eine Zahntasche einführbar ist.

7. Laserinstrument nach einem der vorherigen Ansprüche,
**dadurch gekennzeichnet,**
**dass** der freie Endbereich des Auskoppelelements (15) eine längliche Querschnittsform aufweist.

8. Laserinstrument nach einem der vorherigen Ansprüche,
**dadurch gekennzeichnet,**
**dass** das Auskoppelelement (15) im Bereich seines Halteschaftes (15a) oder im vom Halteteil (1) vorragenden Schaftbereich (b) eine zylindrische Querschnittsform aufweist.

9. Laserinstrument nach einem der vorherigen Ansprüche,
**dadurch gekennzeichnet,**
**dass** die Stirnfläche (23) des Auskoppelelements (15) konvex oder konkav oder eben sphärisch oder quer verlaufend prismatisch ist.

10. Laserinstrument nach einem der vorherigen Ansprüche,
**dadurch gekennzeichnet,**
**dass** der freie Endbereich des Auskoppelelements (15) ein- oder beidseitig konvergent ist, insbesondere keilförmig konvergent, wobei die Konvergenz in eine Stirnfläche (23) ausläuft.

## Claims

1. Laser instrument having
a holder part (1),
a laser light guide device (3), delivering the laser light,
a decoupling element (15) of light permeable material, elongate and extending with a straight longitudinal middle axis (16),
the longitudinal direction of the decoupling element being arranged at an angle (W4) to the direction with which the laser light emerges from the guide device (3),
and which decoupling element is received in a hole of the holder part (1) and projects from the holder part (1) ,
and a laser light deflection device (28), which introduces the laser light emerging from the guide device (3) into the decoupling element (15),
wherein there is associated with the laser instrument a delivery device (32) having an outlet opening (33) for a treatment fluid,
and wherein the outlet opening (33) opens out of an edge region of the holder part (1) surrounding the decoupling element (15),
**characterized in that**,
the region of the holder part (1) out of which the outlet opening (33) opens, borders on the hole wall receiving the decoupling element (15),
**in that** the hole is a cylindrical stepped bore having two shoulder surfaces (19a, 19b) arranged opposite one another,
and **in that** there is attached to the decoupling element (15) a hollow cylindrical holder ring (18) with which the decoupling element (15) is axially held in the stepped bore with play for movement, freely rotatable and between the shoulder surfaces (19a, 19b).

2. Laser instrument according to claim 1,
**characterized in that**,
the outlet opening (33) opens out at the inner surface of the hole receiving the decoupling element (15).

3. Laser instrument according to claim 1 or 2,
**characterized in that**,
there are arranged a plurality of outlet openings (33), arranged distributed around the decoupling element.

4. Laser instrument according to any preceding claim,
**characterized in that**,
the shoulder surfaces (19a, 19b) are arranged opposite one another on the holder part (1) and on a screw part (12) screwed therein, which screw part has the hole (17).

5. Laser instrument according to any preceding claim,
**characterized in that**,
the middle axes (3a, 16) of the guide device (3) and of the decoupling element (15) include an angle (W4) of about 90° to 130°, in particular about 110°.

6. Laser instrument according to any preceding claim,
**characterized in that**,
the free end region of the decoupling element (15) is so dimensioned in its cross-section that it can be introduced into a tooth pocket.

7. Laser instrument according to any preceding claim,
**characterized in that**,
the free end region of the decoupling element (15) has an elongate cross-sectional form.

8. Laser instrument according to any preceding claim,
**characterized in that**,
the decoupling element (15) has in the region of its holder shaft (15a), or in the shaft region (b) projecting from the holder part (1), a cylindrical cross-sectional form.

9. Laser instrument according to any preceding claim,
**characterized in that**,
the end face (23) of the decoupling element (15) is convex or concave or plane spherical or transversely developing prismatic.

10. Laser instrument according to any preceding claim,
**characterized in that**,
the free end region of the decoupling element (15) is convergent to one or both sides, in particular is convergent in the form of a wedge, wherein the convergence runs out in an end surface (23).

## Revendications

1. Instrument à laser comportant :
une partie de support (1)
un dispositif de guidage de lumière laser (3) amenant la lumière laser,
un élément de sortie (15) allongé et s'étendant avec un axe médian longitudinal rectiligne (16) en un matériau translucide,
dont la direction longitudinale est disposée selon un angle (W4) par rapport à la direction dans laquelle la lumière laser sort du dispositif de guidage (3),
et qui est reçu dans un orifice de la partie de support (1) et fait saillie par rapport à la partie de support (1),
et un dispositif de déviation de lumière laser (28) qui introduit la lumière laser sortant du dispositif de guidage (3) dans l'élément de sortie (15),
un dispositif d'amenée (32) avec une ouverture d'embouchure (33) pour un liquide de traitement étant associé à l'instrument à laser,
et l'ouverture d'embouchure (33) débouche à partir d'une zone marginale de la partie de support (1) entourant l'élément de sortie (15),
**caractérisé**
**en ce que** la zone de l'élément de support (1) à partir de laquelle débouche l'ouverture d'embouchure (33) est limitrophe de la paroi de l'orifice recevant l'élément de sortie (15),
**en ce que** l'orifice est un alésage à gradin cylindrique avec deux surfaces d'épaulement (19a, 19b) disposées en opposition l'une de l'autre,
et **en ce que**, sur l'élément de sortie (15), est fixé un anneau de support (18) cylindrique creux, avec lequel l'élément de sortie (15) est maintenu dans l'alésage à gradin axialement entre les surfaces d'épaulement (19a, 19b) et librement rotatif avec un jeu de mouvement.

2. Instrument à laser selon la revendication 1,
**caractérisé en ce que**
l'ouverture d'embouchure (33) débouche au niveau de la face interne de l'orifice recevant l'élément de sortie (15) .

3. Instrument à laser selon la revendication 1 ou 2,
**caractérisé en ce que**
plusieurs ouvertures d'embouchure (33) sont disposées de façon répartie autour de l'élément de sortie.

4. Instrument à laser selon l'une des revendications précédentes,
**caractérisé en ce que**
les surfaces d'épaulement (19a, 19b) sont disposées en regard l'une de l'autre sur la partie de support (1) et sur une partie de vissage (12) vissée dans celle-ci et qui présente l'orifice (17).

5. Instrument à laser selon l'une des revendications précédentes,
**caractérisé en ce que**
les axes médians (3a, 16) du dispositif de guidage (3) et de l'élément de sortie (15) incluent un angle (W4) d'environ 90° jusqu'à 130°, en particulier d'environ 110°.

6. Instrument à laser selon l'une des revendications précédentes,
**caractérisé en ce que**
la zone d'extrémité libre de l'élément de sortie (15) est dimensionnée dans sa section transversale de façon telle à pouvoir être introduite dans une poche dentaire.

7. Instrument à laser selon l'une des revendications précédentes,
**caractérisé en ce que**
la zone d'extrémité libre de l'élément de sortie (15) présente une forme de section transversale oblongue.

8. Instrument à laser selon l'une des revendications précédentes,
**caractérisé en ce que**
l'élément de sortie (15) comporte, dans la zone de son fût de support (15a) ou dans la zone de fût (b) faisant saillie par rapport à la partie de support (1), une forme de section transversale cylindrique.

9. Instrument à laser selon l'une des revendications précédentes,
**caractérisé en ce que**
la face frontale (23) de l'élément de sortie (15) est convexe ou concave ou plane sphérique ou prismatique et s'étendant de façon transversale.

10. Instrument à laser selon l'une des revendications précédentes,
**caractérisé en ce que**
la zone d'extrémité libre de l'élément de sortie (15) est convergente sur un ou deux côtés, en particulier convergente en forme de coin, la convergence aboutissant à une face frontale (23).
